# EUROPEAN PATENT APPLICATION

(11) **EP 2 672 632 A1**
(43) Date of publication of application: **11.12.2013**
(21) Application number: 12754690.1
(22) Date of filing: 09.03.2012
(51) Int. Cl.: H04B 3/54, H02J 13/00

(54) **POWER LINE COMMUNICATION DEVICE, POWER LINE COMMUNICATION SYSTEM, POWER LINE COMMUNICATION METHOD, AND POWER LINE COMMUNICATION PROGRAM**

(30) Priority: 10.03.2011 JP 2011053203
(71) Applicant: Panasonic Corporation, Osaka 571-8501 (JP)
(72) Inventor: KODAMA, Nobutaka, Osaka 540-6207 (JP); KOGA, Hisao, Osaka 540-6207 (JP)
(74) Representative: Eisenführ, Speiser & Partner
(86) International application number: PCT/JP2012/001660
(87) International publication number: WO 2012/120906

(57) **Abstract**

Provided is a power line communication device capable of performing reliable power line communication, without requiring detection of switching noises. The power line communication device corresponds to an MPPT controller (20S) for performing a communication through a power line (PL), and includes a communication unit (25) that communicates data through the power line (PL), a switch unit (23S) that controls supply-power supplied from a PV panel (10) through the power line (PL), and an MPU (26) that performs on/off control of the switch unit (23S) while avoiding a timing at which data is received by the communication unit (2).

## Description

### Technical Field

The present invention relates to a power line communication device, a power line communication system, a power line communication method, and a power line communication program.

### Background Art

In the related art, a power line communication device, which performs Power Line Communication (PLC) that is communication through a power line, is able to supply power to respective electrical devices through the power line, and to send data such as control data for controlling the respective electrical devices through the power line.

When a power supply used in the power line communication is a switching power supply which uses a switching element for converting power in order to obtain desired output power from input power, communication noises (switching noises) occur at the on/off time of the switching element. In this case, it may be not possible to correctly communicate data through the power line.

A power line communication device has been known, which performs power line communication while avoiding switching on/off timing of a DC power supply in order to reduce an influence of such switching noises (for example, see Patent Literature 1). The power line communication device monitors outputs of the switching power supply, detects switching noises existing in the power outputs, and thus generates detection signals. Then, the power line communication device superimposes control signals that are to be transmitted to a plurality of units on the power line by taking the detection signals as synchronizing signals. Thus, it is possible to perform power line communication while reliably avoiding occurrence timing of switching noises.

### Citation List

### Patent Literature

Patent Literature 1: JP-A-2006-109147

### Summary of Invention

### Technical Problem

However, in the technology disclosed in Patent Literature 1, it is necessary to continuously transmit detection signals of the switching noises, in order to know occurrence timing of switching noises. Therefore, a transmission efficiency of the power line may be reduced, or a processing load of the power line communication device may be increased.

The present invention has been made in view of the above problems, and an object thereof is to provide a power line communication device, a power line communication system, a power line communication method, and a power line communication program, which can perform reliable power line communication, without requiring detection of switching noises.

### Solution to Problem

A power line communication device according to an aspect of the present invention is a power line communication device for performing a communication through a power line, the power line communication device including: a communication unit, adapted to communicate data through the power line; a switch unit, adapted to control a supply-power supplied from a power supply through the power line; and a switch control unit, adapted to perform on/off control of the switch unit while avoiding a reception timing which is a timing at which data is received by the communication unit.

According to such a configuration, a switching timing for power control is determined according to a data reception timing. Therefore, it is possible to perform reliable power line communication, without requiring the detection of switching noises.

In the power line communication device according to an aspect of the present invention, the communication unit receives transmission timing information which is information of a timing at which data is transmitted from another power line communication device, and the switch control unit performs the on/off control of the switch unit while avoiding the reception timing corresponding to the transmission timing information received by the communication unit.

According to such a configuration, it is possible to know data reception timing and to determine switching timing for power control according to the data reception timing. Therefore, it is possible to perform reliable power line communication.

In the power line communication device according to an aspect of the present invention, a storage unit is further provided for storing transmission timing information which is information of a timing at which data is transmitted by another power line communication device, and the switch control unit performs the on/off control of the switch unit while avoiding the reception timing corresponding to the transmission timing information stored in the storage unit.

According to such a configuration, it is possible to know a data reception timing and to determine a switching timing for power control according to the data reception timing. Therefore, it is possible to perform reliable power line communication.

In the power line communication device according to an aspect of the present invention, the switch control unit performs the on/off control of the switch unit such that a transmission timing by another power line communication device is synchronous with an off timing at which the switch unit is off.

According to such a configuration, it is possible to adjust a reception timing corresponding to a transmission timing and a switching timing such that they do not overlap with each other, thereby performing reliable power line communication.

In the power line communication device according to an aspect of the present invention, the switch control unit performs the on/off control of the switch unit such that a transmission timing by another power line communication device is synchronous with an on timing at which the switch unit is on, when an off timing at which the switch unit is off is less than a predetermined amount of time.

According to such a configuration, it is possible to adjust reception timing corresponding to transmission timing and switching timing such that they do not overlap with each other, thereby performing reliable power line communication.

In the power line communication device according to an aspect of the present invention, the switch control unit performs the on/off control of the switch unit such that a transmission timing by another power line communication device is synchronous with an on timing of the switch unit, when the on timing at which the switch unit is on is a predetermined amount of time or more.

According to such a configuration, it is possible to adjust reception timing corresponding to transmission timing and switching timing such that they do not overlap with each other, thereby performing reliable power line communication.

In the power line communication device according to an aspect of the present invention, a power supply voltage detection unit, adapted to detect an output voltage of the power supply and a power supply current detection unit, adapted to detect an output current of the power supply are included, and the switch control unit reduces a frequency of the on/off control of the switch unit, when the output voltage of the power supply detected by the power supply voltage detection unit and the output current of the power supply detected by the power supply current detection unit are constant.

According to such a configuration, in a case where the output power of the power supply is constant, it is possible to be assumed as a status where power control is not necessary, and thus the frequency of on/off control is reduced, so that it is possible to reduce power consumption accompanied by a voltage detection, a current detection, and the on/off control of the switching unit.

In the power line communication device according to an aspect of the present invention, the data reception unit receives power instructing data for instructing the supply-power from another power line communication device, and the switch control unit determines a duty cycle of the switch unit based on the power instructing data received by the communication unit.

According to such a configuration, it is possible to adjust power supplied from the power supply to become the power intended by another power line communication device. For example, it is possible to adjust the whole power supplied by a plurality of power supplies to become a maximum.

The power line communication device according to an aspect of the present invention includes: a power supply voltage detection unit, adapted to detect an output voltage of the power supply; a power supply current detection unit, adapted to detect an output current of the power supply; a transformer having the switch unit, the transformer being adapted to transform in voltage the output voltage of the power supply; and a transformed voltage detection unit, adapted to detect the output voltage of the transformer, and the switch control unit determines a duty cycle of the switch unit such that the voltage detected by the transformed voltage detection unit becomes a voltage indicated in power instructing data received by the data reception unit, based on the output voltage of the power supply detected by the power supply voltage detection unit and the output current of the power supply detected by the power supply current detection unit.

According to such a configuration, it is possible to adjust power supplied from the power supply to become the power intended by another power line communication device. For example, it is possible to adjust the whole power supplied by a plurality of power supplies to become a maximum.

A power line communication system according to an aspect of the present invention is a power line communication system in which a plurality of power line communication devices communicate with each other through a power line, wherein a first power line communication device transmits data to a second power line communication device through the power line, and the second power line communication device performs on/off control of a switch unit that controls supply-power supplied from a power supply through the power line while avoiding a reception timing which is a timing at which the data is received through the power line.

According to such a configuration, a switching timing for power control is determined according to a data reception timing by second power line communication devices. Therefore, it is possible to perform reliable power line communication, without requiring the detection of switching noises.

In the power line communication system according to an aspect of the present invention, more than one second power line communication device is provided, the first power line communication device allocates different time periods for data communication to each of the second power line communication devices, and the second power line communication devices perform the on/off control of the switch unit while avoiding corresponding time periods allocated by the first power line communication device.

According to such a configuration, each second power line communication device performs on/off control of a switch unit in an autonomous distributed manner, while avoiding corresponding different time periods which are allocated as communicable periods, so that each power line communication device can perform reliable power line communication.

A power line communication method according to an aspect of the present invention is a power line communication method for performing a communication through a power line, the power line communication method including the steps of: communicating data through the power line; and performing on/off control of a switch unit that controls supply-power supplied from a power supply through the power line, while avoiding a reception timing which is a timing at which data is received.

According to such a configuration, a switching timing for power control is determined according to a data reception timing. Therefore, it is possible to perform reliable power line communication, without requiring the detection of switching noises.

A power line communication program according to an aspect of the present invention is a program which causes each step of the power line communication method to be executed in a computer.

According to such a program, a switching timing for power control is determined according to a data reception timing. Therefore, it is possible to perform reliable power line communication, without requiring the detection of the switching noise.

### Advantageous Effects of Invention

According to the present invention, it is possible to perform reliable power line communication, without requiring the detection of switching noises.

### Brief Description of Drawings

Fig. 1 is a block diagram illustrating a configuration example of a solar power generation system in an embodiment of the present invention.
Fig. 2 is a block diagram illustrating a configuration example of an MPPT controller in the embodiment of the present invention.
Fig. 3 is a block diagram illustrating a detailed configuration example of hardware of a communication unit in the embodiment of the present invention.
Fig. 4 is a diagram explaining an example of on/off control example of a switch unit in the embodiment of the present invention.
Fig. 5 is a diagram explaining another example of on/off control of the switch unit in the embodiment of the present invention.
Fig. 6 is a flow chart illustrating an example of Maximum Power Point Tracking (MPPT) by an MPU in a first embodiment of the present invention.
Fig. 7 is a diagram explaining a switching timing of the switch unit in the embodiment of the present invention.
Fig. 8 is a diagram explaining a switching timing of the switch unit in the embodiment of the present invention.
Fig. 9 is a diagram illustrating a first example of communication timing in a solar power generation system in the embodiment of the present invention.
Fig. 10 is a diagram illustrating an example of a relationship between a communication timing and a switching timing in a solar power generation system in the embodiment of the present invention.
Fig. 11 is a diagram illustrating a second example of communication timing in a solar power generation system in the embodiment of the present invention.
Fig. 12 is a diagram illustrating a third example of communication timing in a solar power generation system in the embodiment of the present invention.

### Description of Embodiments

Hereinafter, an embodiment of the present invention will be described with reference to the drawings.

A power line communication system in the embodiment is, for example, a solar power generation system. Further, a power line communication device in the embodiment is an MPPT controller which performs a Maximum Power Point Tracking (MPPT) control for maximizing the power generated by solar power generation. Hereinafter, a solar power generation system and an MPPT controller will be described as an example of a power line communication system and an example of the power line communication device, respectively.

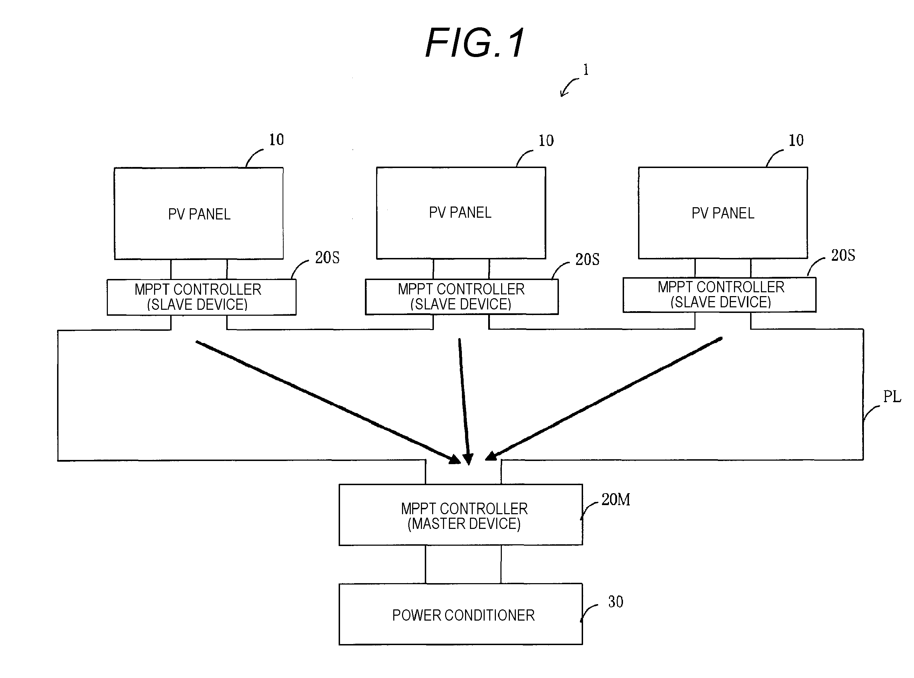

Fig. 1 is a block diagram illustrating a configuration example of a solar power generation system in an embodiment of the present invention. The solar power generation system 1 illustrated in Fig. 1 includes solar power (PV: Photo Voltaic) panels 10, MPPT controllers 20, and a power conditioner 30. The MPPT controller 20 includes an MPPT controller 20M operating as an MPPT master device and an MPPT controllers 20S operating as MPPT slave devices.

In the example illustrated in Fig. 1, a plurality of PV panels 10 are connected serially through a power line PL, and each MPPT controller 20S is connected to each PV panel 10 through the power line PL. Further, the MPPT controller 20M is connected serially to each MPPT controller 20S through the power line PL to manage each MPPT controller 20S. The power conditioner 30 is connected to the MPPT controller 20M through the power line PL.

The PV panel 10 is a panel including a solar cell which converts an optical energy to power due to a photoelectric effect. The PV panel 10, referred here, may be a solar cell alone, or may be a solar cell module in which a plurality of solar cells are connected. Further, respective PV panels 10 may be connected in parallel or in series at locations where they are geographically close to each other, or may be connected in parallel or in series at locations where they are geographically away from each other. In addition, it is possible to obtain a high voltage by connecting the PV panels 10 in series, as illustrated in Fig. 1.

The MPPT controller 20M controls the supply-power supplied from each PV panel 10 such that a total sum of generation power generated by each PV panel 10 becomes maximum, and thus transmits control data to the MPPT controller 20S.

Each MPPT controller 20S receives an input of power generated in the corresponding PV panel 10 and controls such that the power becomes the desired power. The desired power is determined by control data from the MPPT controller 20M, and basically differs at each MPPT controller 20S.

The power conditioner 30 converts DC power, which is output from the MPPT controller 20M and corresponds to the power generated by each PV panel 10, to AC power.

Next, a specific configuration of the MPPT controller 20 will be described.

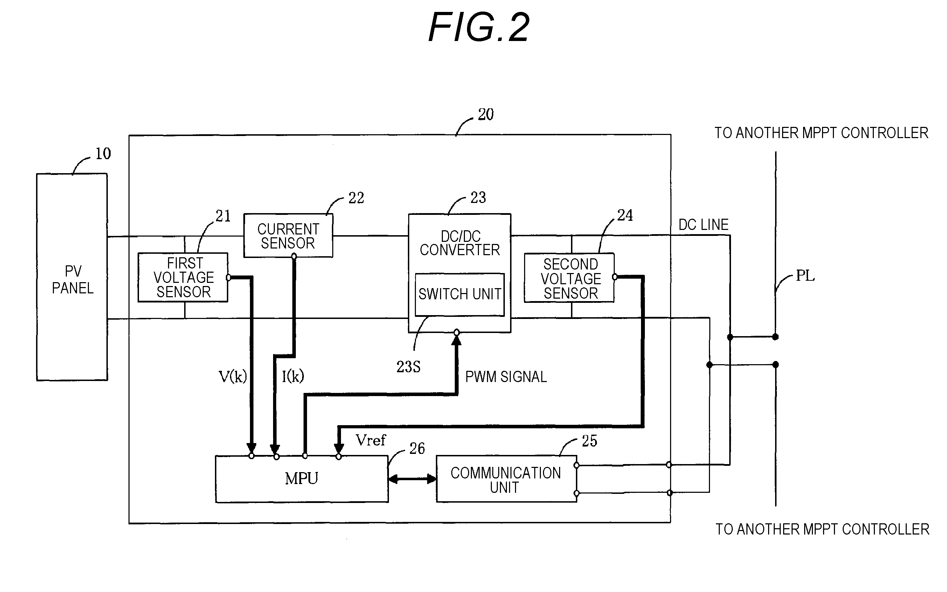

Fig. 2 is a block diagram illustrating a configuration example of an MPPT controller 20.
The MPPT controller 20 includes a first voltage sensor 21, a current sensor 22, a DC/DC converter 23, a second voltage sensor 24, a communication unit 25, and a microprocessor (MPU: Micro Processing Unit) 26.

The first voltage sensor 21 detects an output voltage of the PV panel 10 connected to the MPPT controller 20.

The current sensor 22 detects an output current of the PV panel 10 connected to the MPPT controller 20.

The DC/DC converter 23 includes a switch unit 23S having a switching element for power conversion. The switch unit 23S controls the supply-power which is supplied from the PV panel 10 serving as a power supply, through the power line PL, by switching on and off at a proper timing. Further, the DC/DC converter 23 is connected to the power line PL. Further, the DC/DC converter 23 inputs an output voltage of the PV panel 10 connected to the MPPT controller 20, and transforms in voltage the input voltage using the switch unit 23S. In addition, the DC/DC converter 23 may be a linear type converter using an integrated circuit for power conversion.

The second voltage sensor 24 detects an output voltage of the DC/DC converter 23 (transformed voltage).

The communication unit 25 communicates data through the power line PL. Accordingly, the communication unit 25 may receive data through the power line PL or may transmit data through the power line PL. Further, the DC/DC converter 23 and the communication unit 25 are connected to the power line PL. In addition, a detailed configuration of the communication unit 25 will be described later.

The MPU 26 performs on/off control (switching control) of the switch unit 23S, while avoiding a timing at which the communication unit 25 receives data. At this time, the MPU 26 transmits to the DC/DC converter 23, Pulse Width Modulation (PWM) signal which is a signal for performing the on/off control of the switch unit 23S. The detailed description of the on/off control of the switch unit 23S will be described later.

Further, the MPU 26 controls a duty cycle of the switch unit 23S in the DC/DC converter 23 based on the voltage detected by the first voltage sensor 21 and the current detected by the current sensor 22 such that the voltage detected by the second voltage sensor 24 becomes a voltage value instructed by control data (for example, power instructing data for instructing a power value) received by the communication unit 25. A detailed description of the control of the duty cycle of the switch unit 23S will be made later.

In addition, a power line communication program for performing each step of a power line communication method described in the present embodiment is stored in a predetermined memory (not shown) in the MPPT controller 20.

Further, the MPPT controller 20 illustrated in Fig. 2 and other MPPT controllers 20 connected to the power line PL constitute the solar power generation system 1.

Next, a detailed description of the communication unit 25 of the MPPT controller 20 will be made.

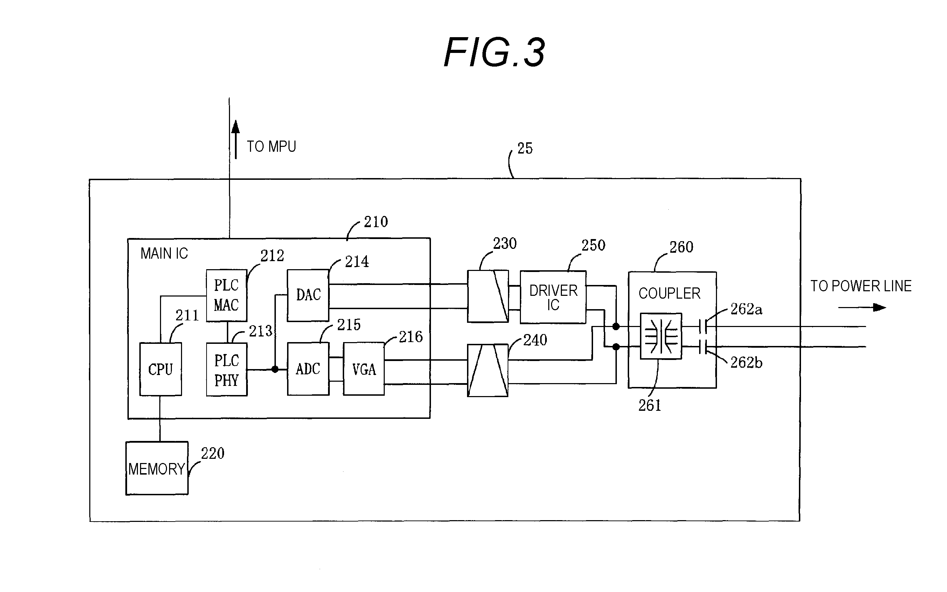

Fig. 3 is a block diagram illustrating a detailed configuration example of hardware of a communication unit 25.
The communication unit 25 includes a main Integrated Circuit (IC) 210, a memory 220, a Low Pass Filter (LPF) 230, a Band Pass Filter (BPF) 240, a driver IC 250, and a coupler 260. The communication unit 25 is configured by, for example, a circuit module.

The main IC 210 includes a Central Processing Unit (CPU) 211, a Power Line Communication·Media Access Control Layer (PLC·MAC) block 212, a Power Line Communication·Physical Layer (PLC·PHY) block 213, a D/A Converter (DAC) 214, an A/D Converter (ADC) 215, and a Variable Gain Amplifier (VGA) 216. In addition, the main IC 210 is an integrated circuit functioning as a control circuit which performs power line communication. In addition, the main IC 210 is connected to the MPU 26 and transmits and receives data through serial communication.

A Reduced Instruction Set Computer (RISC) processor of 32 bits is mounted on the CPU 211. A PLC·MAC block 212 manages a Media Access Control (MAC) Layer of a transmission and reception signal, and a PLC·PHY block 213 manages a Physical (PHY) Layer of the transmission and reception signal. The DA converter 214 converts a digital signal to an analog signal. The AD converter 215 converts an analog signal to a digital signal. A variable amplifier 216 amplifies a signal input from the BPF 240.

The memory 220 is a semiconductor memory device such as a Random Access Memory (RAM) or a Read Only Memory (ROM). The LPF 230 passes a low frequency component from the signal which is input from the DAC 214, but cuts off other components thereof. The BPF 240 passes a predetermined frequency component from the signal which is input from the coupler 260, but cuts off other components thereof. The driver IC 250 is an IC for driving a certain device. The coupler 260 is configured by a coil transformer 261, and coupling capacitors 262a and 262b.

In addition, the CPU 211 controls operations of the PLC·MAC block 212 and the PLC·PHY block 213, and controls whole communication unit 25 by using data stored in the memory 220.

The communication by the communication unit 25 will be performed as follows in outline. Data to be transmitted, which is stored in the memory 220 or the like, is transmitted to the main IC 210. The main IC 210 performs a digital signal processing on the data to generate a digital transmission signal. Then, the generated digital transmission signal is converted to an analog signal by the DA converter 214 and is output to the power line PL through the low pass filter 230, the driver IC 250, and the coupler 260.

The signal received from the power line 700 is passed through the coupler 260, and sent to the band pass filter 240. Then, after the gain of the signal is adjusted by the variable amplifier 216, the signal is converted to a digital signal in the AD converter 215. Subsequently, the digital signal processing is performed on the converted digital signal so as to be converted to digital data. The converted digital data is stored in, for example, the memory 220.

Next, an example of the digital signal processing which is realized by the main IC 210 will be described. The communication unit 25 uses as a signal for transfer, a multicarrier signal such as an Orthogonal Frequency Division Multiplexing (OFDM) signal which is generated using a plurality of sub-carriers. The communication unit 25 converts the data for transmission to a multicarrier transmission signal such as the OFDM signal, and outputs the converted signal, whereas the communication unit processes a multicarrier reception signal such as the OFDM signal to convert it to reception data. The digital signal processing for the conversion is mainly performed in the PLC·PHY block 213.

Next, data communication in the solar power generation system 1 will be described.
Here, data communication for Maximum Power Point Tracking (MPPT) between the MPPT controller 20M and the MPPT controller 20S will be described as an example of the data communication. The data communication is performed at a communication timing described later.

First, the MPPT controller 20M receives information (voltage information) of a voltage detected by the first voltage sensor 21 and information (current information) of a current detected by the current sensor 22 from the MPPT controller 20S, through the power line PL.

Subsequently, the MPPT controller 20M calculates an optimal voltage value of the PV panel 10 and a current value of the PV panel with respect to the PV panel 10, on the basis of the voltage information and current information of the MPPT controller 20S. Here, the optimal voltage value and the optimal current value are a voltage value and a current value of each PV panel 10, in which power in whole PV panels 10 becomes a maximum value. Since the optimal voltage value and the optimal current value depend on an orientation of the PV panel 10, a location of the PV panel 10, and weather, they differ basically at each PV panel 10.

Subsequently, the MPPT controller 20M transmits optimal voltage information and optimal current information containing the calculated voltage value and current value of the PV panel 10, to the MPPT controller 20S corresponding to the PV panel 10, through the power line PL. The optimal voltage information and the optimal current information are an example of the power instructing data for instructing the power supplied from the PV panel 10. Further, optimal power information calculated from the optimal voltage information and the optimal current information may be transmitted to the MPPT controller 20S.

Subsequently, the MPPT controller 20S receives the optimal voltage information and optimal current information from the MPPT controller 20M through the power line PL. Then, the MPPT controller 20S performs the on/off control of the switch unit 23S in the DC/DC converter 23 in order to make a voltage and a current to become the voltage value contained in the optimal voltage information and the current value contained in the received optimal current information.

Next, the on/off control of the switch unit 23S, which is performed by the MPU 26 of the MPPT controller 20S will be described.

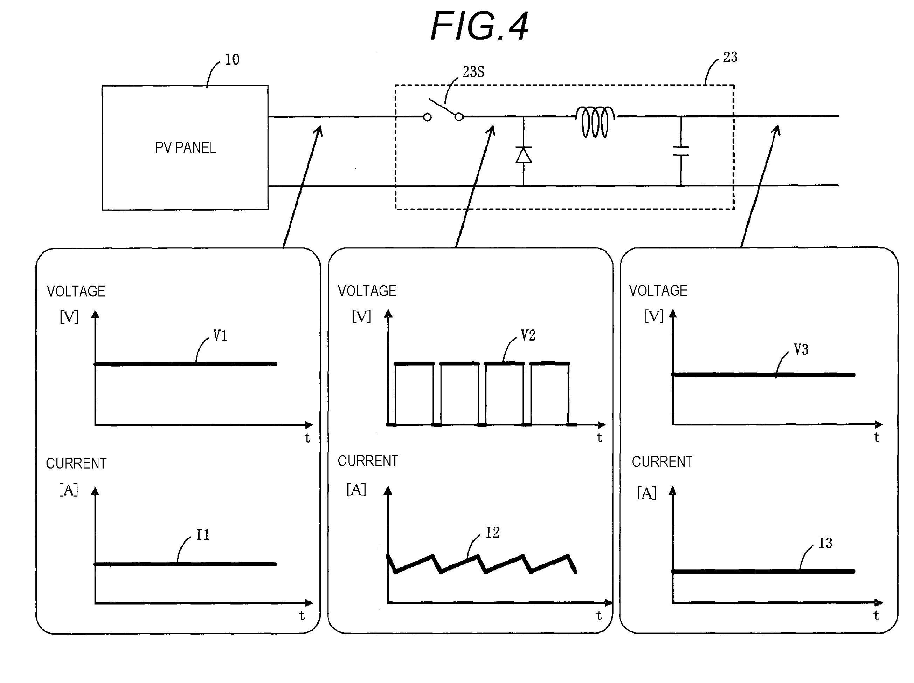

Fig. 4 is a diagram explaining an on/off control example of the switch unit 23S.

The voltage value V1 and the current value I1 indicate the voltage value and the current value which are detected in a former stage (PV panel 10 side) of the DC/DC converter 23, and correspond to the voltage value detected by the first voltage sensor 21 and the current value detected by the current sensor 22. In this state, values of the voltage and the current, which are generated by solar power, are indicated as they are, without being affected by the switching of the switch unit 23S.

The voltage value V2 and the current value I2 are the voltage value and the current value of the DC/DC converter 23, and more specifically, indicate the voltage value and the current value immediately after the switch unit 23S. In this state, the voltage becomes a predetermined voltage value at the time of switching on of the switch unit 23S, and becomes zero at the time of switching off thereof. Further, the current value rises at the time of switching on of the switch unit 23S, and is lowered at the time of switching off thereof.

The voltage value V3 and the current value I3 indicate the voltage value and the current value which are detected in a later stage (power line PL side) of the DC/DC converter 23, and the voltage value corresponds to the voltage value detected by the second voltage sensor 24. In this stage, both the voltage value and the current value are smoothed by a diode section, a coil section, a capacitor section, and the like in the DC/DC converter 23.

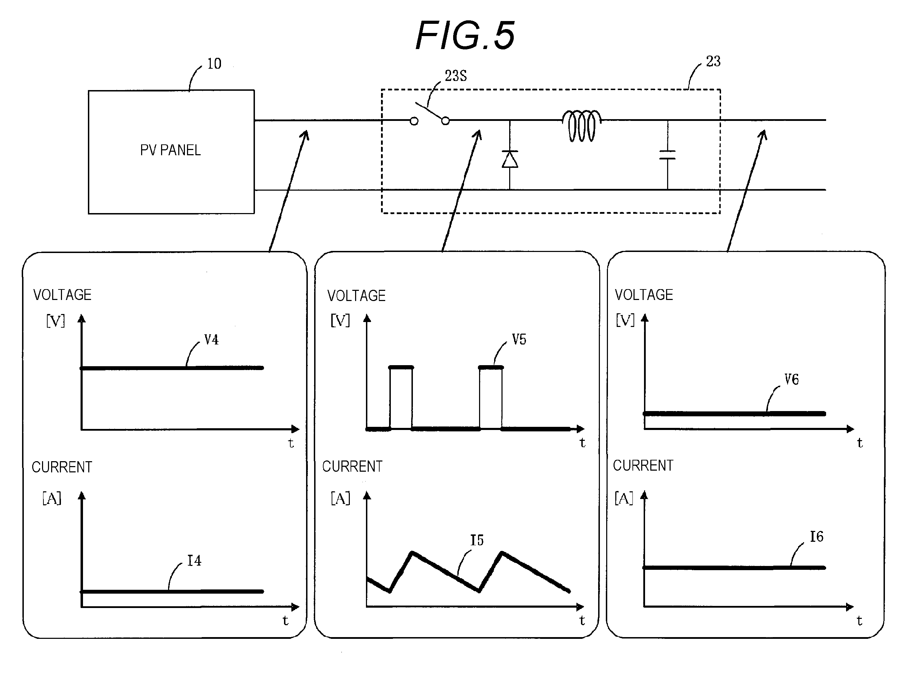

Further, Fig. 5 is a diagram explaining another example of the on/off control of the switch unit 23S.

Although the waveforms of the voltage values V4 to V6 and the current values I4 to I6 are the same as the waveforms of the voltage values V1 to V3 and the current values I1 to I3 illustrated in Fig. 4, the switching off times of the switch unit 23S are longer than the case of Fig. 4. For this reason, the voltage value V6 of the smoothed voltage and the current value I6 of the smoothed current are smaller than the voltage value V3 and the current value I3 illustrated in Fig. 4. In other words, the longer the time of switching on is, the larger the voltage value and current value are, whereas the longer the time of switching off is, the smaller the voltage value and current value are.

Next, an example of the Maximum Power Point Tracking (MPPT) by the MPU 26 of the MPPT controller 20S will be described.

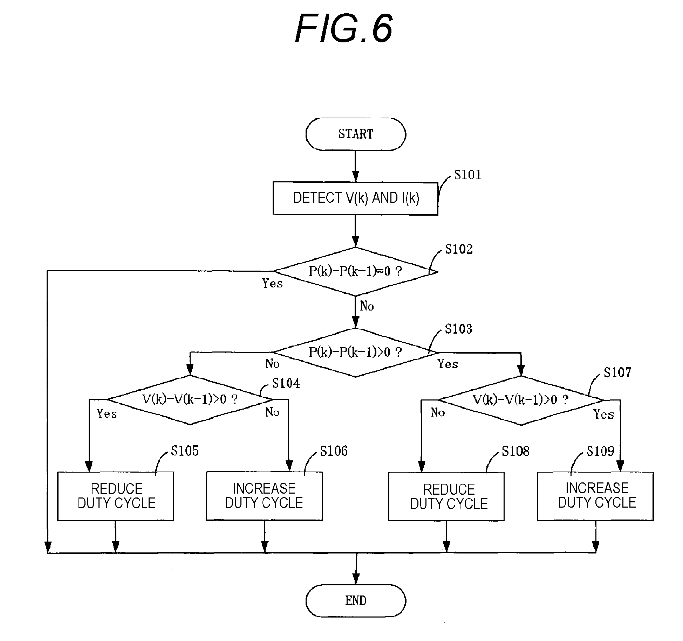

Fig. 6 is a flow chart illustrating an example of Maximum Power Point Tracking (MPPT) by the MPU 26.

First, the first voltage sensor 21 detects an output voltage V(k) of the PV panel 10. Further, the current sensor 22 detects an output current I(k) of the PV panel 10 (step S101). In addition, k indicates timing.

Subsequently, the MPU 26 determines whether or not the output power P(k) of the PV panel 10 is equal to the output power P(k-1) of the PV panel 10 before change of a duty cycle (switching period) of the previous time (step S102). In other words, it is determined whether or not P(k)-P(k-1)=0.

In a case where P(k)-P(k-1)=0, the MPU 26 does not transmit a PWM signal. Therefore, the MPU 26 does not change the duty cycle of the switch unit 23S, and the output voltage and the output current of the PV panel 10 at present are maintained.

On the other hand, in a case where P(k)-P(k-1)≠0, the MPU 26 determines whether or not the output power P(k) of the PV panel 10 is greater than the output power P(k-1) of the PV panel 10 before change of the duty cycle at the previous time (step S103). In other words, it is determined whether or not P(k)-P(k-1)>0.

In a case where P(k)-P(k-1)≤0 (No in step S103), the MPU 26 determines whether or not the output voltage V(k) of the PV panel 10 is greater than the output voltage V(k-1) of the PV panel 10 before the change of a duty cycle at the previous time (step S104). In other words, it is determined whether or not V(k)-V(k-1)>0.

In a case where V(k)-V(k-1)>0 (Yes in step S104), the MPU 26 controls the switch unit 23S such that the voltage Vref detected by the second voltage sensor 24 is reduced. In other words, the MPU 26 transmits a PWM signal for controlling the switch unit 23S to the DC/DC converter 23 such that the duty cycle of the switch unit 23S becomes small (step S105).

In a case where V(k)-V(k-1)≤0 (No in step S104), the MPU 26 controls the switch unit 23S such that the voltage Vref detected by the second voltage sensor 24 is increased. In other words, the MPU 26 transmits a PWM signal for controlling the switch unit 23S to the DC/DC converter 23 such that the duty cycle of the switch unit 23S becomes large (step S106).

On the other hand, in a case where P(k)-P(k-1)>0 (Yes in step S103), the MPU 26 determines whether or not the output voltage V(k) of the PV panel 10 is greater than the output voltage V(k-1) of the PV panel 10 before change of a duty cycle of previous time (step S107). In other words, it is determined whether or not V(k)-V(k-1)>0.

In a case where V(k)-V(k-1)≤0 (No in step S107), the MPU 26 controls the switch unit 23S such that the voltage Vref detected by the second voltage sensor 24 is reduced. In other words, the MPU 26 transmits a PWM signal for controlling the switch unit 23S to the DC/DC converter 23 such that the duty cycle of the switch unit 23S becomes small (step S108).

In a case where V(k)-V(k-1)>0 (Yes in step S107), the MPU 26 controls the switch unit 23S such that the voltage Vref detected by the second voltage sensor 24 is increased. In other words, the MPU 26 transmits a PWM signal for controlling the switch unit 23S to the DC/DC converter 23 such that the duty cycle of the switch unit 23S becomes large (step S109).

According to the Maximum Power Point Tracking (MPPT) by the MPPT controller 20S, the generation power by the PV panel 10 that is affected by weather conditions can be controlled to maximize the sum of each PV panel 10, and a system can perform power generation efficiently as a whole.

Next, switching timing of the switch unit 23S in the present embodiment will be described.

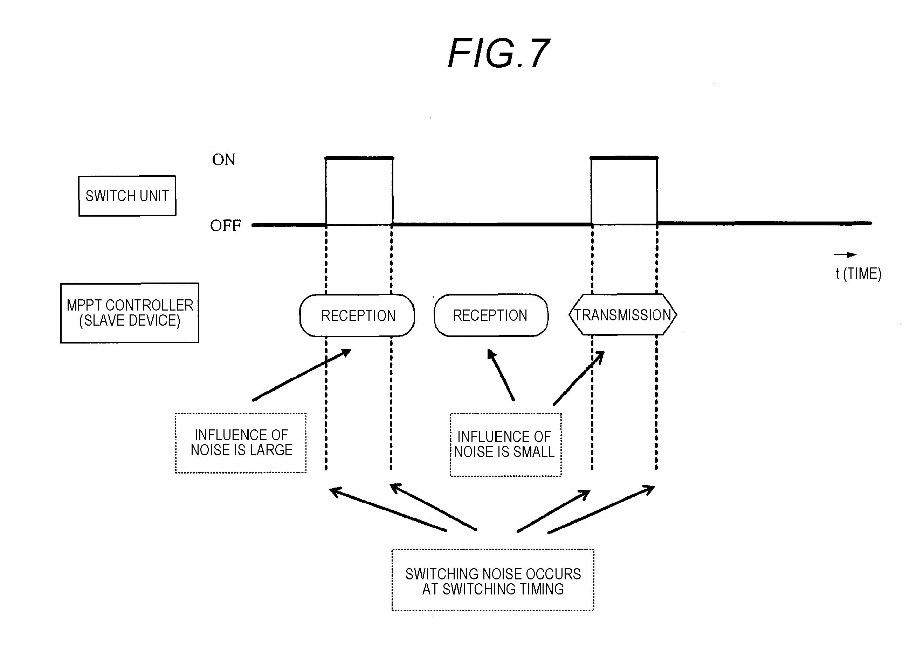

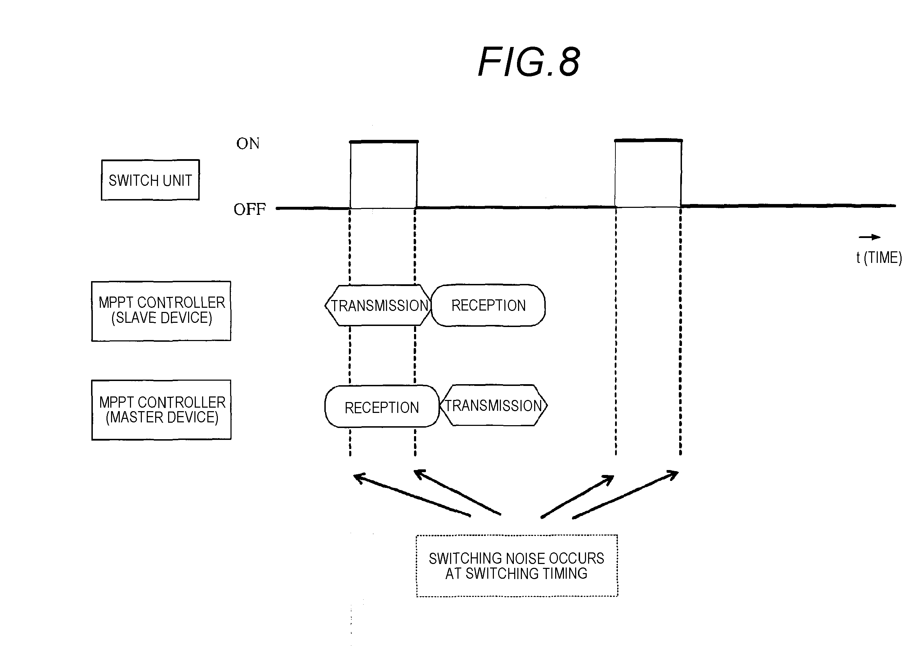

Figs. 7 and 8 are diagrams explaining switching timing of a switch unit 23S.

In timing (switching timing) at which the switch unit 23S turns from on to off and from off to on, switching noise may occur on the power line PL. Further, the switching noise occurs in the vicinity of the switch unit 23S (DC/DC converter 23) of the MPPT controller 20S which control the power supplied from the PV panel 10. Accordingly, if timing at which data is received by the communication unit 25 of the MPPT controller 20S and switching timing are overlapped, the influence of the switching noise becomes large.

Incidentally, as illustrated in Fig. 7, the communication unit 25 of the MPPT controller 20S performs the on/off control (switching) of the switch unit 23S, while avoiding timing at which data is received through the power line PL. Thus, while the received data is not overlapped with the switching noise, it is possible to perform a correct decoding processing and the like on data.

In addition, as illustrated in Fig. 7, even if timing at which data is transmitted by the communication unit 25 of the MPPT controller 20S and the switching timing are overlapped, the switching timing is not the timing at which the communication unit 25 of the MPPT controller 20S receives data, and the influence of the switching noise becomes small. Accordingly, the MPPT controller 20M can perform a correct decoding processing and the like on data in a case of receiving the data.

For example, as illustrated in Fig. 8, the communication unit 25 of the MPPT controller 20S transmits data through the power line PL at the switching timing, and receives data through the power line PL immediately after the transmission. On the other hand, the communication unit 25 of the MPPT controller 20M receives data through the power line PL at the switching timing, and transmits data through the power line PL immediately after the reception.

It is preferable that the data reception timing and the switching timing be not overlapped, that is, the switching of the switch unit 23S be performed, while avoiding the timing at which data is received.

However, as far as communication is possible, timing at which the MPPT controller 20S receives a leading portion or an ending portion of data frame and the switching timing of the switch unit 23S may be overlapped.

Accordingly, as far as communication is possible, "timing at which the MPPT controller 20S receives a leading portion or an ending portion of data frame and the switching timing of the switch unit 23S are overlapped" may be considered to be included in "performing the switching of the switch unit 23S while avoiding timing at which the MPPT controller 20S receives data".

The overlap amount of the data and the switching timing also depends on the communication environment, but may be allowed up to 10% of PLC one frame.

Here, data from the MPPT controller 20S to the MPPT controller 20M is, for example, voltage information and current information of the MPPT controller 20S. Further, data from the MPPT controller 20M to the MPPT controller 20S is optimal voltage information and optimal current information of the MPPT controller 20M.

Next, communication timing of data communication in the solar power generation system 1 will be described.

In the present embodiment, data is communicated using a PLC frame between the MPPT controller 20M and the MPPT controller 20S. Further, Time Dimension Multiple Access / Time Division Duplex (TDMA/TDD) communication are assumed as communication schemes.

First, a first example of communication timing in the solar power generation system 1 will be described.

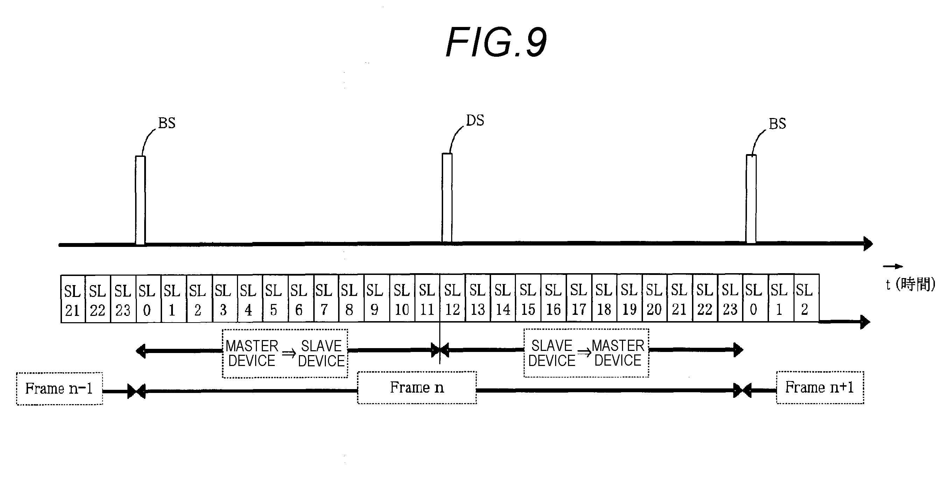

Fig. 9 is a diagram illustrating a first example of communication timing in a solar power generation system 1. In the example illustrated in Fig. 9, communication of 12 slots is performed in each of upstream (MPTT controller 20M to MPPT controller 20S) / downstream (MPPT controller 20S to MPPT controller 20M). In other words, one frame of the PLC frame is configured by 24 slots. Further, 10 msec are allocated per one frame of the PLC frame, so that a transmission speed becomes 1.152 MBPS.

In the example illustrated in Fig. 9, slot (SL) 0 to slot (SL) 11 are used in upstream communication, and SL12 to SL23 are used in downstream communication. Here, a beacon signal BS as data from the MPPT controller 20M is transmitted at SL0. Further, for example, a data signal DS as data from the MPPT controller 20S is transmitted at SL12. In addition, the beacon signal BS is a signal for controlling communication by each MPPT controller 20S, and it is periodically transmitted.

Here, the beacon signal BS contains information of slot numbers of slots allocated to each MPPT controller 20S, information for requesting voltage information and current information to each MPPT controller 20S, optimal voltage information and optimal current information with respect to voltage information and current information transmitted from each MPPT controller 20S, and the like. Further, the data signal DS contains voltage information and current information of the MPPT controller 20S.

Further, information indicating a transmission timing of the beacon signal BS (for example, information on transmission interval and information on transmission timing) may be contained in the beacon signal BS. In this case, the MPPT controller 20S is able to know the transmission timing of the beacon signal BS by receiving the beacon signal BS. Accordingly, the MPPT controller 20S can adjust a reception timing corresponding to the transmission timing of the beacon signal BS and the switching timing of the switch unit 23S such that they are not overlapped. In addition, the MPU 26 of the MPPT controller 20S, for example, calculates a difference between the transmission timing and the reception timing in the past, and stores it as a history, thereby easily recognizing the reception timing corresponding to the transmission timing.

In addition, while information indicating transmission timing of the beacon signal BS is not contained in the transmitted beacon signal BS, the MPPT controller 20S may store in advance information indicating transmission timing or reception timing corresponding to the transmission timing in the memory 220 of the communication unit 25.

The MPPT controller 20S performs the on/off control of the switch unit 23S, while avoiding reception timing corresponding to the transmission timing.

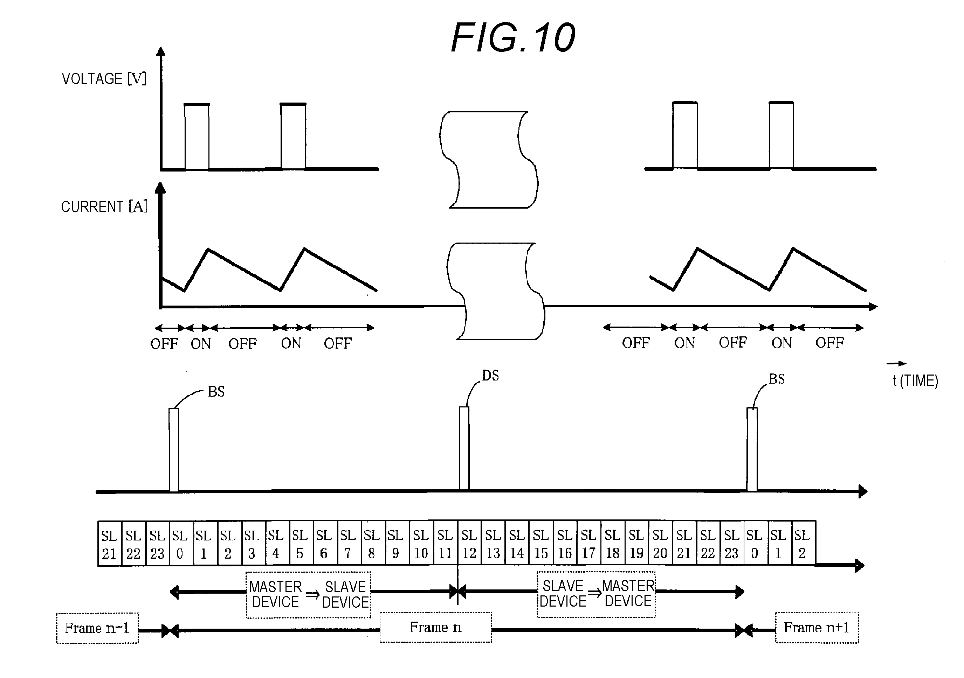

Fig. 10 is a diagram illustrating an example of a relationship between communication timing and switching timing in a solar power generation system 1.

If switching noise occurs at the time of data reception by the MPPT controller 20S, it is likely to be affected by switching noises. Incidentally, as illustrated in Fig. 10, the MPU 26 of the MPPT controller 20S synchronizes the transmission timing of the beacon signal BS by the MPPT controller 20M with a timing period while the switch unit 23S is off (an off timing period OFF). In other words, the MPU 26 performs the on/off control of the switch unit 23S such that the transmission timing of the beacon signal BS and the off timing period OFF of the switch unit 23S are overlapped.

Further, in a case where the off timing period OFF of the switch unit 23S is equal to or less than the slot time (time width) of the beacon signal BS, the MPU 26 may synchronize the transmission timing of the beacon signal by the MPPT controller 20M and a timing period (an on timing period ON) while the switch unit 23S is on. In other words, in a case where the off timing period OFF of the switch unit 23S is less than a predetermined amount of time, the MPU 26 may perform the on/off control of the switch unit 23S such that the transmission timing of the beacon signal BS and the on timing period ON of the switch unit 23S are overlapped.

Further, regardless of the off timing period OFF of the switch unit 23S, in a case where the on timing period ON of the switch unit 23S is equal to or more than slot time of the beacon signal BS, the MPU 26 may synchronize transmission timing of the beacon signal BS by the MPPT controller 20M and the on timing period ON of the switch unit 23S. In other words, in a case where the on timing period ON of the switch unit 23S is equal to or more than a predetermined amount of time, the MPU 26 may perform the on/off control of the switch unit 23S such that the transmission timing of the beacon signal BS and the on timing period ON of the switch unit 23S are overlapped.

In addition, it is assumed that the beacon signal BS is transmitted by the MPPT controller 20M in the above description, but it is preferable to perform the same periodic processing, even if other data is transmitted by the MPPT controller 20M.

Here, an example of a communication sequence of data communication in the solar power generation system 1 will be described.

First, at a predetermined timing from when the communication unit 25 of the MPPT controller 20M is activated, the communication unit 25 transmits the beacon signal BS to each MPPT controller 20S through the power line PL. The communication unit 25 of each MPPT controller 20S receives the beacon signal BS in synchronization with the predetermined timing through the power line PL. Then, the MPU 26 of each MPPT controller 20S performs the on/off control of the switch unit 23S on the basis of the received beacon signal BS. Information for instructing each MPPT controller 20S to perform the on/off control at different timings is contained in the beacon signal BS, so that each MPPT controller 20S performs the on/off control of the switch unit 23S in an autonomously distributed manner.

Next, a second example of communication timing in a solar power generation system 1 will be described.

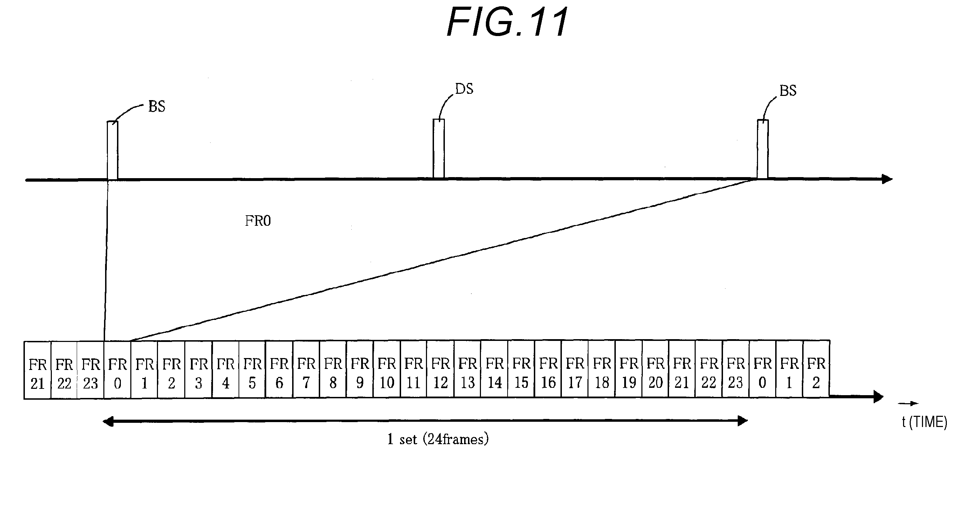

Fig. 11 is a diagram illustrating a second example of communication timing in the solar power generation system 1. In the example illustrated in Fig. 11, the MPPT controller 20M and the MPPT controller 20S communicate at each frame (for example, at each 10 ms). Further, 24 MPPT controllers 20S serving as slave devices are provided. Further, one set is configured by 24 PLC frames. In addition, one set means the number of terminals that can be connected. Further, one frame of the PLC frame is configured by 24 slots.

For example, the MPPT controller 20M and the first MPPT controller 20S communicate at frame 0 (FRO), and the MPPT controller 20M and the second MPPT controller 20S communicate at frame 1 (FR1). In this manner, a frame number may correspond to an identification number for identifying the MPPT controller 20S. Further, for example, the beacon signal BS is transmitted by the MPPT controller 20M at slot 0 (SL0), and the data signal DS as a response signal with respect to the beacon signal BS is transmitted by the MPPT controller 20S at slot 12.

In addition, in the communication example, the information of the frame number allocated to each MPPT controller 20S, instead of or together with the slot number, is contained in beacon signal BS.

Further, in a case in which the number of the MPPT controllers 20S is increased, the MPU 26 of the MPPT controller 20S may increase the number of PLC frames per one set, by shortening the cycle of the PLC frame (or reducing the time period of a slot) or reducing the number of slots within the PLC frame.

Next, a third example of communication timing in the solar power generation system 1 will be described.

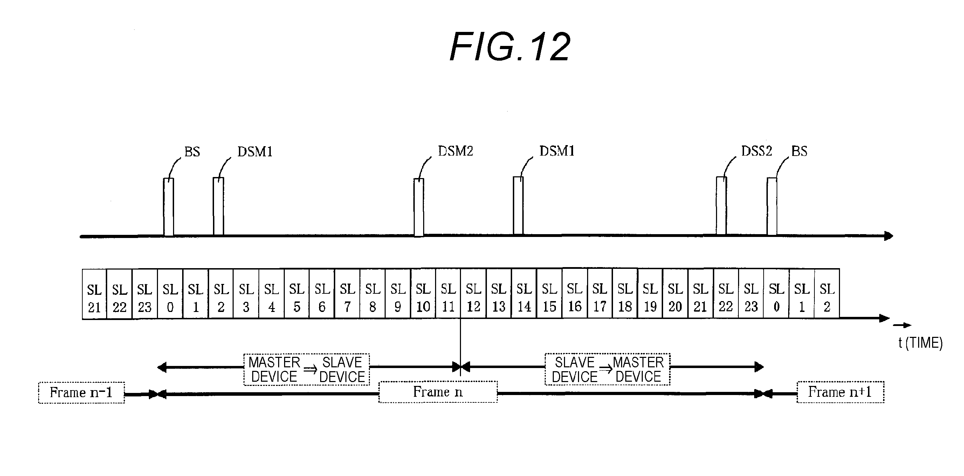

Fig. 12 is a diagram illustrating a third example of communication timing in a solar power generation system 1. In the example shown in Fig. 12, the MPPT controller 20M and the MPPT controller 20S communicate at each slot. Further, 12 MPPT controllers 20S serving as slave devices are provided. Further, one frame of the PLC frame is configured by 24 slots, and is for example, 10 ms.

Further, the communication unit 25 of the MPPT controller 20M transmits data signals DSM (DSM1, DSM2, ...) for each MPPT controller 20S, separately from the beacon signal BS or by superimposing them on the beacon signal BS. On the other hand, the communication unit 25 of the MPPT controller 20S transmits data signals DSS (DSS1, DSS2, ...) as response signals for the data signals DSM.

For example, a data signal DSM1 is communicated from the MPPT controller 20M to a first MPPT controller 20S at slot 2 (SL2), and a data signal DSM2 is communicated from the MPPT controller 20M to a second MPPT controller 20S at slot 10 (SL10). Further, a data signal DSS1 is communicated from the first MPPT controller 20S to the MPPT controller 20M at slot 14 (SL14), and a data signal DSS2 is communicated from the second MPPT controller 20S to the MPPT controller 20M at slot 22 (SL22). In this manner, a slot number and an identification number for identifying the MPPT controller 20S may be corresponded.

Further, in a case where the number of MPPT controllers 10S is increased, the MPU 26 of the MPPT controller 10S may reduce the number of PLC frames per one set, and increase the number of slots per one frame.

Here, the data signal DSM contains information of slot numbers of slots allocated to the MPPT controller 20S, information for requesting voltage information and current information to the MPPT controller 20S, optimal voltage information and optimal current information with respect to voltage information and current information transmitted from the MPPT controller 20S, and the like. Further, the data signal DSS contains the voltage information and the current information of the MPPT controller 20S.

Further, information indicating transmission timing of the MPPT controller 20M (for example, information of transmission intervals and information of transmission timing) may be contained in the data signal DSM. The transmission timing may include a transmission timing with respect to all MPPT controllers 20S, including other MPPT controllers 20S, or may include only a transmission timing with respect to a separate MPPT controller 20S. In this case, the MPPT controller 20S can know the transmission timing by the MPPT controller 20M by receiving the data. Accordingly, the MPPT controller 20S can adjust reception timing corresponding to the transmission timing by the MPPT controller 20M and the switching timing of the switch unit 23S such that they are not overlapped.

In addition, while information indicating transmission timing is not contained in the data signal DSM, the MPPT controller 20S may store in advance information indicating transmission timing or reception timing corresponding to the transmission timing in the memory 220 of the communication unit 25.

Further, each slot is an example of time period for communicating data, and the MPU 26 of the MPPT controller 20M determines which slot is to be allocated to which MPPT controller 20S. Then, the MPU 26 of the MPPT controller 20S performs the on/off control of the switch unit 23S, while avoiding allocated slots in which communication can be performed, that is, such that slots and switching timing are not overlapped.

According to the solar power generation system 1 of the present embodiment, the MPU 2 of the MPPT controller 20S performs the on/off control of the switch unit 23S while avoiding the reception timing by the MPPT controller 20S corresponding to the transmission timing by the MPPT controller 20M, so that it is possible to perform reliable power line communication without especially requiring a device for detecting the switching noise.

Furthermore, in addition to controls described above, the MPU 26 of the MPPT controller 20S may perform the following control.

The MPU 26 of the MPPT controller 20S may control the communication unit 25 to transmit data to be transmitted to the MPPT controller 20M, a plurality of times. Thus, it is possible to perform robust communication.

Further, in a case where there is an increase in information amount of data to be transmitted by the MPPT controller 20S, the MPU 26 may control the communication unit 25 to transmit the data by the data being divided into multiple frames (for example, frame 0 and frame 1), and may control the communication unit 25 to transmit the data using other slots (for example, slots other than slot 0 and slot 12).

Further, the MPU 26 may control the communication unit 25 to perform data transmission from the MPPT controller 20S to the MPPT controller 20M each time at predetermined timing, or may control the communication unit 25 to perform the data transmission only when the state (here, voltage detected by the first voltage sensor 21 or current detected by the current sensor 22) changes.

Further, if the state does not change, the MPU 26 may change the operation mode of the MPPT controller 20S to a sleep mode. In the sleep mode, the MPU 26 is activated periodically to determine whether or not there is a change in the state, but in times other than the determination time, the MPU 26 intermittently performs the operation of the MPPT controller 20S or stops the operation. Thus, the MPU 26 can perform data transmission by the communication unit 25 each time when the state changes usually, but can transfer to the sleep mode to reduce the power consumption when the state does not change.

In this manner, in a case where the voltage detected by the first voltage sensor 21 and the current detected by the current sensor 22 do not vary, the MPU 26 may reduce the frequency of the on/off control of the switch unit 23S.

Although the present invention has been described in detail with reference to a specific embodiment, it is apparent to those skilled in the art that it is possible to make various changes and modifications without departing from the spirit and scope of the present invention.
This application is based on Japanese Patent Application No. 2011-053203 filed on March 10, 2011, the contents of which are incorporated herein by reference.

### Industrial Applicability

The present invention is useful in a power line communication device, a power line communication system, and a power line communication program, which can perform reliable power line communication, without requiring the detection of switching noises.

### Reference Signs List

1: solar power generation system
10: PV panel
20: MPPT controller
20M: MPPT controller (master device)
20S: MPPT controller (slave device)
30: power conditioner
21: first voltage sensor
22: current sensor
23: DC/DC converter
23S: switch unit
24: second voltage sensor
25: communication unit
26: MPU
210: main IC
211: CPU
212: PLC·MAC block
213: PLC·PHY block
214: DAC
215: ADC
216: VGA
220: memory
230: LPF
240: BPF
250: driver IC
260: coupler
PL: power line

## Claims

1. A power line communication device for performing a communication through a power line, the power line communication device comprising:
a communication unit, adapted to communicate data through the power line;
a switch unit, adapted to control a supply-power supplied from a power supply through the power line; and
a switch control unit, adapted to perform on/off control of the switch unit while avoiding a reception timing which is a timing at which data is received by the communication unit.

2. The power line communication device according to claim 1, wherein
the communication unit receives transmission timing information which is information of a timing at which data is transmitted from another power line communication device, and
the switch control unit performs the on/off control of the switch unit while avoiding the reception timing corresponding to the transmission timing information received by the communication unit.

3. The power line communication device according to claim 1, further comprising:
a storage unit for storing transmission timing information which is information of a timing at which data is transmitted by another power line communication device, wherein
the switch control unit performs the on/off control of the switch unit while avoiding the reception timing corresponding to the transmission timing information stored in the storage unit.

4. The power line communication device according to claim 2 or 3, wherein
the switch control unit performs the on/off control of the switch unit such that a transmission timing by another power line communication device is synchronous with an off timing at which the switch unit is off.

5. The power line communication device according to claim 2 or 3, wherein
the switch control unit performs the on/off control of the switch unit such that a transmission timing by another power line communication device is synchronous with an on timing at which the switch unit is on, when an off timing at which the switch unit is off is less than a predetermined amount of time.

6. The power line communication device according to claim 2 or 3, wherein
the switch control unit performs the on/off control of the switch unit such that a transmission timing by another power line communication device is synchronous with an on timing of the switch unit, when the on timing at which the switch unit is on is a predetermined amount of time or more.

7. The power line communication device according to any one of claims 1 to 6, further comprising:
a power supply voltage detection unit, adapted to detect an output voltage of the power supply; and
a power supply current detection unit, adapted to detect an output current of the power supply, wherein
the switch control unit reduces a frequency of the on/off control of the switch unit, when the output voltage of the power supply detected by the power supply voltage detection unit and the output current of the power supply detected by the power supply current detection unit are constant.

8. The power line communication device according to any one of claims 1 to 7, wherein
the data reception unit receives power instructing data for instructing the supply-power from another power line communication device, and
the switch control unit determines a duty cycle of the switch unit based on the power instructing data received by the communication unit.

9. The power line communication device according to claim 8, further comprising:
a power supply voltage detection unit, adapted to detect an output voltage of the power supply;
a power supply current detection unit, adapted to detect an output current of the power supply;
a transformer having the switch unit, the transformer being adapted to transform in voltage the output voltage of the power supply; and
a transformed voltage detection unit, adapted to detect the output voltage of the transformer, wherein
the switch control unit determines a duty cycle of the switch unit such that the voltage detected by the transformed voltage detection unit becomes a voltage indicated in power instructing data received by the data reception unit, based on the output voltage of the power supply detected by the power supply voltage detection unit and the output current of the power supply detected by the power supply current detection unit.

10. A power line communication system in which a plurality of power line communication devices communicate with each other through a power line, wherein
a first power line communication device transmits data to a second power line communication device through the power line, and
the second power line communication device performs on/off control of a switch unit that controls supply-power supplied from a power supply through the power line while avoiding a reception timing which is a timing at which the data is received through the power line.

11. The power line communication system according to claim 10, wherein
more than one second power line communication device is provided,
the first power line communication device allocates different time periods for data communication to each of the second power line communication devices, and
the second power line communication devices perform the on/off control of the switch unit while avoiding corresponding time periods allocated by the first power line communication device.

12. A power line communication method for performing a communication through a power line, the power line communication method comprising the steps of:
communicating data through the power line; and
performing on/off control of a switch unit that controls supply-power supplied from a power supply through the power line, while avoiding a reception timing which is a timing at which data is received.

13. A power line communication program which causes each step of the power line communication method according to claim 12 to be executed in a computer.
